# EUROPEAN PATENT APPLICATION

(11) **EP 1 936 972 A2**
(43) Date of publication of application: **25.06.2008**
(21) Application number: 07150210.8
(22) Date of filing: 20.12.2007
(51) Int. Cl.: H04N 5/76

(54) **Received-data recording system, receiver, receiver control method, recorder, data recording method, and program**

(30) Priority: 20.12.2006 JP 2006342335
(71) Applicant: Sony Corporation, Minato-ku Tokyo (JP)
(72) Inventor: Hayashi, Morihiko, Tokyo (JP)
(74) Representative: Thévenet, Jean-Bruno

(57) **Abstract**

A received-data recording system includes a receiver (110) receiving content data, and a recorder connected to the receiver (110) via a network (150) and recording the content data received by the receiver (110). The receiver (110) includes a receiving unit (118) receiving the content data, a data read/write unit (122) writing the content data received by the receiving unit (118) and reading the written content data, a data sender selectively sending the content data received by the receiving unit (118) or the content data read by the data read/write unit (122) to the recorder, and a controller (112) controlling the data read/write unit (122) and the data sender in accordance with a state of the recorder at the time a recording instruction is given. The recorder includes a data receiving unit receiving content data sent from the receiver (110), and a data write unit writing the content data received by the data receiving unit.

## Description

### BACKGROUND OF THE INVENTION

### 1. Field of the Invention

The present invention relates to received-data recording systems, receivers, receiver control methods, recorders, data recording methods, and programs. More particularly, the present invention relates to a received-data recording system and the like including a receiver and a recorder connected to each other via a network, in which, when the recorder is not capable of promptly performing recording at the time an instruction to record content data received by the receiver is given, the content data received by the receiver is recorded using the recorder without missing any part, while keeping the system configuration simple, by using a data read/write unit included in the receiver.

### 2. Description of the Related Art

Streaming of audio/visual (AV) content using a network such as the Internet or a cable television has been proposed. In general, receivers called "set-top boxes" that are connected to the Internet, a cable television, or the like and that receive content data are distributed. Some receivers have built-in hard disk drives (HDDs) for recording and storing the received content data. However, there are not many receivers with HDDs that can fully cooperate with generally sold recorders.

In particular, regardless of whether a recorder connected to a home network, such as the Ethernet® or the like, is capable of performing recording or not, content data received by a receiver is recorded in a built-in HDD in the receiver in order to record the entire content data without missing any part.

For example, Japanese Unexamined Patent Application Publication No. 10-241348 describes a method of controlling an AV system in which an AV system controller having received a reservation determines the state of a plurality of AV apparatuses at a reserved start time, selects an AV apparatus capable of recording, and starts recording a program using the selected AV apparatus.

### SUMMARY OF THE INVENTION

In the related art described in Japanese Unexamined Patent Application Publication No. 10-241348, the recording of a program starts after an AV apparatus capable of recording is selected from among a plurality of AV apparatuses. Therefore, the reserved program can be recorded without missing any part. However, the system includes the plurality of AV apparatuses, which are controlled using the AV system controller. As a result, the configuration of the system becomes complex.

It is desirable to record content data received by a receiver using a recorder without missing any part, while keeping a system configuration simple.

According to an embodiment of the present invention, there is provided a received-data recording system including the following elements: a receiver configured to receive content data; and a recorder configured to record the content data received by the receiver, the recorder being connected to the receiver via a network. The receiver includes the following elements: a receiving unit configured to receive the content data; a data read/write unit configured to write the content data received by the receiving unit and to read the written content data; a data sender configured to selectively send the content data received by the receiving unit or the content data read by the data read/write unit to the recorder; and a controller configured to control the data read/write unit and the data sender in accordance with a state of the recorder at the time a recording instruction is given. The recorder includes the following elements: a data receiving unit configured to receive content data sent from the receiver; and a data write unit configured to write the content data received by the data receiving unit.

In the foregoing embodiment of the present invention, the receiver includes the data read/write unit configured to write the content data received by the receiving unit and to read the written content data, and the data sender configured to selectively send the content data received by the receiving unit or the content data read by the data read/write unit to the recorder. In the receiver, the data read/write unit and the data sender are controlled in accordance with the state of the recorder at the time a recording instruction is given.

For example, when the recorder is in a standby state at the time a recording instruction is given, the controller sends an activation request to the recorder and controls the data read/write unit to start writing the content data received by the receiver. Upon receipt of an active state notification in response to the activation request, the controller controls the data read/write unit to write the content data received by the receiving unit until the entire content data written in the data read/write unit is read and to read the written content data at a bit rate higher than a bit rate at which the written content data has been written, and the controller controls the data sender to send the content data read by the data read/write unit to the recorder. After the entire content data written in the data read/write unit has been read, the controller controls the data sender to send the content data received by the receiving unit to the recorder. In this case, the content data received since the recording instruction was given is sent to the recorder as the recorder becomes capable of performing recording. As a result, the received content data can be recorded without missing any part.

Alternatively, for example, when the recorder is in a busy state at the time a recording instruction is given, the controller controls the data read/write unit to start writing the content data received by the receiving unit, and the controller starts periodically determining whether the recorder is in the busy state. When the recorder exits the busy state, the controller controls the data read/write unit to write the content data received by the receiving unit until the entire content data written in the data read/write unit is read and to read the written content data at a bit rate higher than a bit rate at which the written content data has been written, and the controller controls the data sender to send the content data read by the data read/write unit to the recorder. After the entire content data written in the data read/write unit has been read, the controller controls the data sender to send the content data received by the receiving unit to the recorder. In this case, the content data received since the recording instruction was given is sent to the recorder as the recorder becomes capable of performing recording. As a result, the received content data can be recorded without missing any part.

In the foregoing embodiment of the present invention, the receiver may further include a recording-instruction giving unit configured to give a recording instruction to the controller at a reserved recording start time; and an activation-request sending unit configured to send an activation request to the recorder in the case where the recorder is in a standby state a predetermined time before the recording start time. In this case, the recorder can be activated prior to the recording start time, and the content data received by the receiving unit can be sent to the recorder without involving reading and writing from/to the data read/write unit.

According to the foregoing embodiment of the present invention, in the recorder, content data sent from the receiver is received by the data receiving unit, and the received content data is written by the data write unit. As has been described above, when the recorder is in a standby state or a busy state at the time a recording instruction is given, first content data and second content data corresponding to the same content are successively sent at a first bit rate and a second bit rate lower than the first bit rate, respectively, from the receiver to the recorder. The data receiving unit of the recorder receives the first and second content data sent successively in this manner. The data write unit writes the first and second content data as content data corresponding to the same content.

According to the foregoing embodiment of the present invention, when the recorder is not capable of promptly performing recording at the time the receiver gives an instruction to record the received content data, the data read/write unit included in the receiver is used to record the content data received by the receiver using the recorder without missing any part, while keeping the system configuration simple.

### BRIEF DESCRIPTION OF THE DRAWINGS

Fig. 1 is a block diagram of the structure of a received-data recording system according to an embodiment of the present invention;
Fig. 2 is a block diagram of the structure of a receiver;
Fig. 3 is a flowchart of a control operation performed by a central processing unit (CPU) included in the receiver at the time a recording instruction is given;
Fig. 4 is a block diagram of the structure of a recorder; and
Fig. 5 is a diagram showing the exemplary sequence in the case where a user confirms a program by selecting a channel (CH) using the receiver and gives a recording instruction by operating a record button.

### DESCRIPTION OF THE PREFERRED EMBODIMENTS

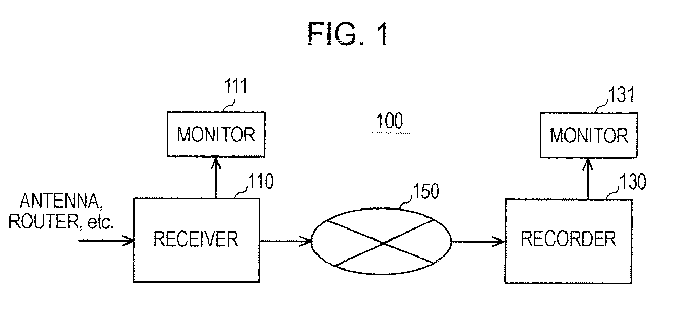

An embodiment of the present invention will be described with reference to the drawings. Fig. 1 shows the structure of a received-data recording system 100 according to an embodiment. The received-data recording system 100 includes a receiver 110 and a recorder 130, which are connected to each other via a network 150. The network 150 is a home network, such as the Ethernet® or the like.

The receiver 110 receives content data of real-time content and is connected to an antenna for receiving broadcast signals, a router for connecting to the Internet, or the like. The receiver 110 is connected to a monitor 111 for outputting images and sounds based on the received content data.

The recorder 130 records content data sent from the receiver 110. The recorder 130 is connected to a monitor 131 for outputting images and sounds based on the content data sent from the receiver 110 or the content data received, recorded, and then reproduced.

In the received-data recording system 100 shown in Fig. 1, the receiver 110 receives content data of predetermined content from satellite broadcasting, the Internet, or the like. The content data received by the receiver 110 is sent from the receiver 110 to the recorder 130 via the network 150. The recorder 130 receives the content data sent from the receiver 110 via the network 150 and records the content data.

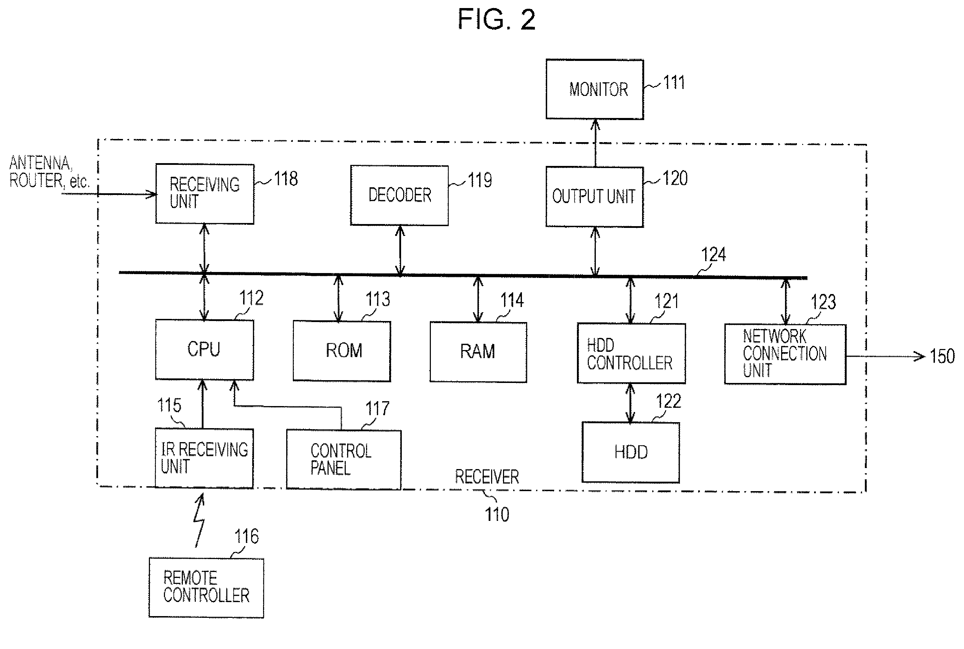

Fig. 2 shows the structure of the receiver 110. The receiver 110 includes a CPU 112, a read-only memory (ROM) 113, a random-access memory (RAM) 114, an infrared (IR) receiving unit 115, a control panel 117, a receiving unit 118, a decoder 119, an output unit 120, an HDD controller 121, an HDD 122, and a network connection unit 123. The CPU 112, the ROM 113, the RAM 114, the HDD controller 121, the receiving unit 118, the decoder 119, the output unit 120, and the network connection unit 123 are connected to an internal bus 124.

The CPU 112 functions as a controller for controlling the operation of the overall receiver 110. The CPU 112 is connected to the control panel 117 for allowing a user (operator) to enter various operations and the IR receiving unit 115 for receiving an infrared signal serving as a remote control signal sent from a remote controller 116.

The ROM 113 stores a control program for controlling the operation of the CPU 112 or the like. The RAM 114 functions as a working area for the CPU 112 or the like. The CPU 112 loads the control program stored in the ROM 113 into the RAM 114, if necessary, and expands the control program in the RAM 114. By loading and executing the control program expanded in the RAM 114, the CPU 112 controls the operation of the components of the receiver 110.

The receiving unit 118 receives content data (image data and audio data) of real-time content from, for example, satellite broadcasting, terrestrial digital broadcasting, the Internet, or the like. An input side of the receiving unit 118 is connected to an antenna for receiving broadcast signals, a router for connecting to the Internet, or the like. Content data received by the receiving unit 118 includes, for example, compressed, decoded data which has been decoded by compression, such as the Moving Picture Experts Group (MPEG) or the like.

In order to output an image and sound based on the content data received by the receiving unit 118 using the monitor 111, the decoder 119 applies decoding on the content data (compressed, decoded data) and outputs the decoded content data. In order to output an image and sound from the monitor 111, the output unit 120 converts the content data (image data and audio data) output from the decoder 119 into signals corresponding to the monitor 111 and supplies the signals to the monitor 111.

The HDD 122 writes content data received by the receiving unit 118, reads the written content data, and supplies the content data to the network connection unit 123 or the decoder 119. The HDD 122 constitutes a data read/write unit. The HDD controller 121 controls data input and output between the HDD 122 and the internal bus 124. An HDD with a relatively small storage capacity can be used as the HDD 122. The storage capacity of the HDD 122 is approximately, for example, 50 GB. The storage capacity of an HDD provided in the recorder 130 described later is approximately, for example, 500 GB to 1 TB.

The network connection unit 123 connects to the network 150, such as the Ethernet® or the like, and sends content data to the recorder 130 via the network 150.

The operation of the receiver 110 shown in Fig. 2 will now be described. First, the operation in the case where a user views real-time content received by the receiving unit 118 on the monitor 111 will be described. Content data of the real-time content received by the receiving unit 118 is supplied to the decoder 119, which applies decoding on the content data. The decoded content data (image data and audio data) output from the decoder 119 is supplied to the monitor 111 via the output unit 120. Accordingly, the monitor 111 obtains an image and sound based on the real-time content received by the receiving unit 118.

Next, the operation in the case where an instruction to record real-time content is given will be described. For example, this recording instruction is given to the CPU 112 by a user operating the control panel 117 or the remote controller 116. Alternatively, this recording instruction may be given by the CPU 112 at a recording start time relating to a reserved recording setting. In this case, the CPU 112 constitutes a recording-instruction giving unit. A reserved-recording operation is entered by a user operating the control panel 117 or the remote controller 116.

When a recording instruction is given, the state of the recorder 130 is determined. This can be performed by the CPU 112 asking the recorder 130 about its state through the network connection unit 123. Whether the recorder 130 is in an active state or a standby state (sleep state) is determined. If the recorder 130 is in the standby state, whether the recorder 130 is in a busy state is determined. The busy state is the state in which, for example, the recorder 130 is currently recording content data sent from another receiver (not shown) connected to the network 150 and hence it is difficult for the recorder 130 to record data sent from the receiver 110, or the recorder 130 is performing recording for itself and hence it is difficult for the recorder 130 to record data sent from the receiver 110.

When the recorder 130 is in the active state and is not in the busy state, content data received by the receiving unit 118 is sent from the network connection unit 123 to the recorder 130 via the network 150. In this case, the bit rate of the content data sent from the network connection unit 123 to the recorder 130 is equivalent to the bit rate (first bit rate) of the content data received by the receiving unit 118.

When the recorder 130 is in the active state and also is in the busy state at the time the recording instruction is given, the operation of the receiver 110 will be as follows.

Specifically, the content data received by the receiving unit 118 is started to be written into the HDD 122. In this case, the content data received by the receiving unit 118 is supplied to the HDD 122 via the HDD controller 121. Further, the CPU 112 starts periodically determining whether the recorder 130 is in the busy state.

When the recorder 130 exits the busy state, the content data written in the HDD 122 is read at a bit rate (second bit rate) higher than the writing bit rate (first bit rate), and the read content data is sent from the network connection unit 123 to the recorder 130 via the network 150. In this case, the writing of the content data received by the receiving unit 118 into the HDD 122 continues. As has been described above, since the reading bit rate is higher than the writing bit rate, the amount of content data that has been written in the HDD 122 and that is to be sent to the recorder 130 gradually decreases.

When the amount of data that has been written in the HDD 122 and that is to be sent to the recorder 130 becomes zero, that is, after the entire content data written in the HDD 122 has been read, the content data received by the receiving unit 118 is, instead of being written into and read from the HDD 122, directly sent from the network connection unit 123 to the recorder 130 via the network 150.

In this manner, when the recorder 130 is in the active state and also in the busy state at the time a recording instruction is given, using the HDD 122, the content data that has been received since the recording instruction was given is sent to the recorder 130 as the recorder 130 exits the busy state and becomes capable of recording. As a result, the received content data can be recorded without missing any part. After the entire content data written in the HDD 122 has been read, the content data in the HDD 122 is deleted, and the useless consumption of the storage capacity is avoided.

Alternatively, when the recorder 130 is in the standby state at the time the recording instruction is given, the operation of the receiver 110 will be as follows.

Specifically, the content data received by the receiving unit 118 is started to be written into the HDD 122. Also, an activation request is sent to the recorder 130. This activation request is sent from the CPU 112 to the recorder 130 via the network connection unit 123.

Upon receipt of an active state notification from the recorder 130, the content data written in the HDD 122 is read at a bit rate (second bit rate) higher than the writing bit rate (first bit rate), and the read content data is sent from the network connection unit 123 to the recorder 130 via the network 150. In this case, the writing of the content data received by the receiving unit 118 into the HDD 122 continues. As has been described above, since the reading bit rate is higher than the writing bit rate, the amount of content data that has been written in the HDD 122 and that is to be sent to the recorder 130 gradually decreases.

When the amount of data that has been written in the HDD 122 and that is to be sent to the recorder 130 becomes zero, that is, after the entire content data written in the HDD 122 has been read, the content data received by the receiving unit 118 is, instead of being written into and read from the HDD 122, directly sent from the network connection unit 123 to the recorder 130 via the network 150.

In this manner, when the recorder 130 is in the standby state at the time a recording instruction is given, using the HDD 122, the content data that has been received since the recording instruction was given is sent to the recorder 130 as the recorder 130 exits the standby state and becomes capable of recording. As a result, the received content data can be recorded without missing any part. After the entire content data written in the HDD 122 has been read, the content data in the HDD 122 is deleted, and the useless consumption of the storage capacity is avoided.

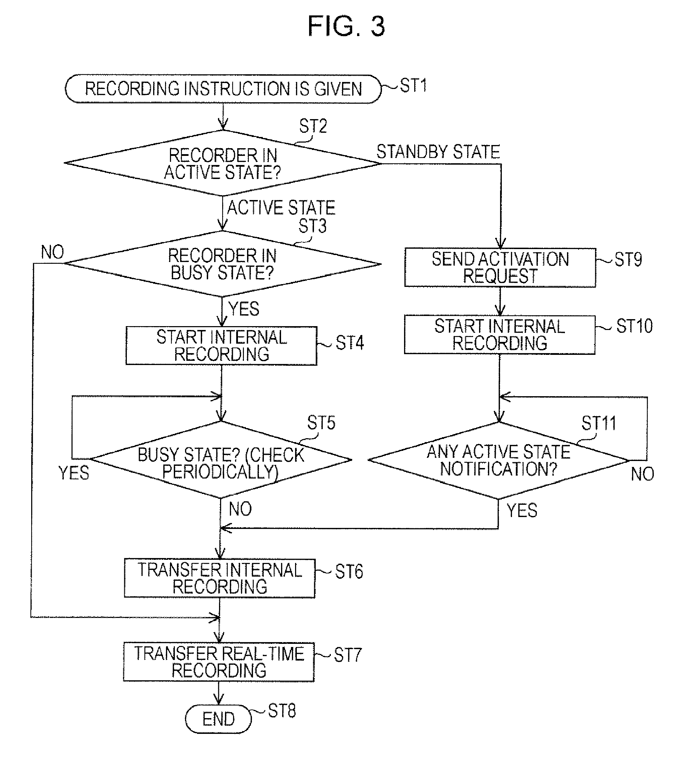

Fig. 3 is a flowchart of a control operation performed by the CPU 112 at the time a recording instruction is given. When a recording instruction is given in step ST1, the CPU 112 proceeds to step ST2. In step ST2, the CPU 112 determines whether the recorder 130 is in the active state. When the recorder 130 is in the active state, the CPU 112 determines in step ST3 whether the recorder 130 is in the busy state.

When the recorder 130 is not in the busy state, the CPU 112 starts transferring real-time recording in step ST7. Thereafter, when the recording ends, the CPU 112 ends a series of control steps in step ST8. Transferring the real-time recording is, as has been described above, the operation of directly sending the content data received by the receiving unit 118 to the recorder 130 via the network connection unit 123, without involving reading and writing from/to the HDD 122.

When it is determined in step ST3 that the recorder 130 is in the busy state, the CPU 112 starts internal recording in step ST4. Internal recording is, as has been described above, the operation of writing the content data received by the receiving unit 118 into the HDD 122, In step ST5, the CPU 112 determines whether the recorder 130 is in the busy state. This determination is periodically performed by the CPU 112 until it is determined that the recorder 130 exits the busy state.

When it is determined that the recorder 130 exits the busy state, the CPU 112 starts transferring the internal recording in step ST6. Transferring the internal recording is, as has been described above, the operation of reading the content data written in the HDD 122 at a bit rate higher than the writing bit rate and sending the read content data to the recorder 130 via the network connection unit 123. After the entire content data written in the HDD 122 has been read, the CPU 112 proceeds to step ST7, and the CPU 112 starts transferring the real-time recording. Thereafter, when the recording ends, the CPU 112 ends the series of control steps in step ST8.

When it is determined in step ST2 that the recorder 130 is in the standby state, the CPU 112 proceeds to step ST9, In step ST9, the CPU 112 sends an activation request to the recorder 130 via the network connection unit 123. In step ST10, the CPU 112 starts internal recording. Thereafter in step ST11, the CPU 112 determines whether an active state notification from the recorder 130 has been received.

When the active state notification has been received, in step ST6, the CPU 112 starts transferring the internal recording. After the entire content data written in the HDD 122 has been read, the CPU 112 proceeds to step ST7, and the CPU 112 starts transferring the real-time recording. Thereafter, when the recording ends, the CPU 112 ends the series of control steps in step ST8.

In the flowchart shown in Fig. 3, even in the case of reserved recording, after a recording instruction has been given, the state of the recorder 130 is determined, and, if the recorder 130 is in the standby state, an activation request is sent to the recorder 130, However, in the case of reserved recording, a recording start time has been set by a reservation.

Therefore, in this case, the CPU 112 determines the state of the recorder 130 a predetermined time (e.g., one minute) before the recording start time. When the recorder 130 is in the standby state, the CPU 112 may send an activation request in advance. Accordingly, when the recorder 130 is in the standby state, the recorder 130 can be activated before the recording start time. In this way, the content data received by the receiving unit 118 can be sent to the recorder 130, without involving reading and writing from/to the HDD 122.

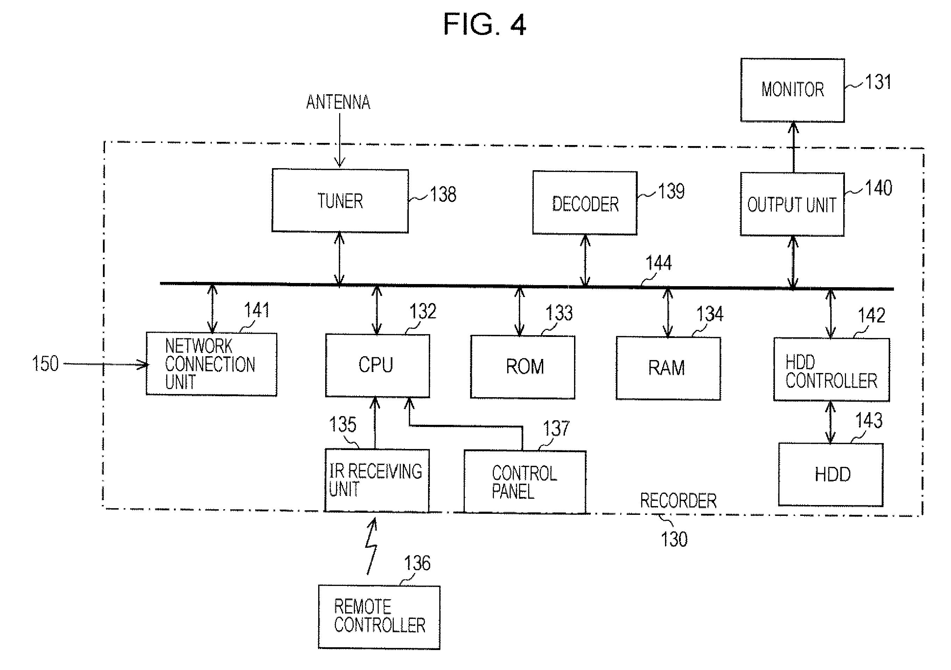

Fig. 4 shows the structure of the recorder 130. The recorder 130 includes a CPU 132, a ROM 133, a RAM 134, an IR receiving unit 135, a control panel 137, a tuner unit 138, a decoder 139, an output unit 140, a network connection unit 141, an HDD controller 142, and an HDD 143. The CPU 132, the ROM 133, the RAM 134, the tuner unit 138, the decoder 139, the output unit 140, the network connection unit 141, and the HDD controller 142 are connected to an internal bus 144.

The CPU 132 functions as a controller for controlling the operation of the overall recorder 130. The CPU 132 is connected to the control panel 137 for allowing a user (operator) to enter various operations and the IR receiving unit 135 for receiving an infrared signal serving as a remote control signal from a remote controller 136.

The ROM 133 stores a control program for controlling the operation of the CPU 132 or the like. The RAM 134 functions as a working area for the CPU 132 or the like. The CPU 132 loads the control program stored in the ROM 133 into the RAM 134, if necessary, and expands the control program in the RAM 134. By loading and executing the control program expanded in the RAM 134, the CPU 132 controls the operation of the components of the recorder 130.

The tuner unit 138 constitutes a receiving unit for receiving, for example, satellite broadcasting, terrestrial digital broadcasting, and the like. An input side of the tuner unit 138 is connected to, for example, an antenna for receiving broadcast signals. Content data received by the tuner unit 138 includes, for example, compressed, decoded data which has been decoded by MPEG compression or the like.

In order to output an image and sound based on the content data received by the tuner unit 138 or content data reproduced by the HDD 143 using the monitor 131, the decoder 139 applies decoding on the content data (compressed, decoded data) and outputs the decoded content data. In order to output an image and sound from the monitor 131, the output unit 140 converts the content data (image data and audio data) output from the decoder 139 into signals corresponding to the monitor 131 and supplies the signals to the monitor 131.

The network connection unit 141 connects to the network 150 and receives content data from the receiver 110 via the network 150. The HDD 143 writes content data received by the tuner unit 138 or content data received by the network connection unit 141, reads the written content data, and supplies the content data to the decoder 139. The HDD 143 constitutes a data write unit. The HDD controller 142 controls data input and output between the HDD 143 and the internal bus 144.

The operation of the recorder 130 shown in Fig. 4 will now be described. First, the operation in the case where a user views real-time content (program) received by the tuner unit 138 will be described. The content data output from the tuner unit 138 is supplied to the decoder 139, which applies decoding on the content data. The decoded content data (image data and audio data) output from the decoder 139 is supplied to the monitor 131 via the output unit 140. Accordingly, the monitor 131 obtains an image and sound based on the real-time content received by the tuner unit 138.

Next, the operation in the case where an instruction to record the real-time content (program) received by the tuner unit 138 is given will be described. For example, this recording instruction is given to the CPU 132 by a user operating the control panel 137 or the remote controller 136. Alternatively, for example, this recording instruction may be given by the CPU 132 at a reserved recording start time. A reservation operation is entered by a user operating the control panel 137 or the remote controller 136. In this case, the content data received by the tuner unit 138 is written into the HDD 143 via the HDD controller 142.

The operation in the case where content data sent from the receiver 110 is received by the network connection unit 141 will be described.

As has been described above, when the recorder 130 is in the active state and is not in the busy state at the time a recording instruction is given from the receiver 110, real-time recording is transferred from the receiver 110 to the recorder 130. In this case, the content data is received at the bit rate (first bit rate) of transferring the real-time recording. The content data received by the network connection unit 141 is written into the HDD 143 via the HDD controller 142.

As has been described above, when the recorder 130 is in the active state and also in the bust state or when the recorder 130 is in the standby state at the time a recording instruction is given from the receiver 110, the internal recording is transferred at first from the receiver 110 to the recorder 130, which is followed by transferring the real-time recording. In this case, the network connection unit 141 receives, as the content data corresponding to the same content, first content data at the bit rate (second bit rate) of transferring the internal recording, and then second content data at the bit rate (first bit rate) of transferring the real-time recording. As has been described above, the second bit rate is set to be higher than the first bit rate.

The first and second content data successively received by the network connection unit 141 are supplied to the HDD 143 via the HDD controller 142, and are written as the content data corresponding to the same content.

Next, the operation in the case where an image and sound based on the content data written in the HDD 143 is viewed using the monitor 131 will be described. The content data read from the HDD 143 is supplied to the decoder 139 via the HDD controller 142 and is decoded in a sequential manner. The decoded content data (image data and audio data) output from the decoder 139 is supplied to the monitor 131 via the output unit 140. Accordingly, the monitor 131 obtains an image and sound based on the content data read from the HDD 143.

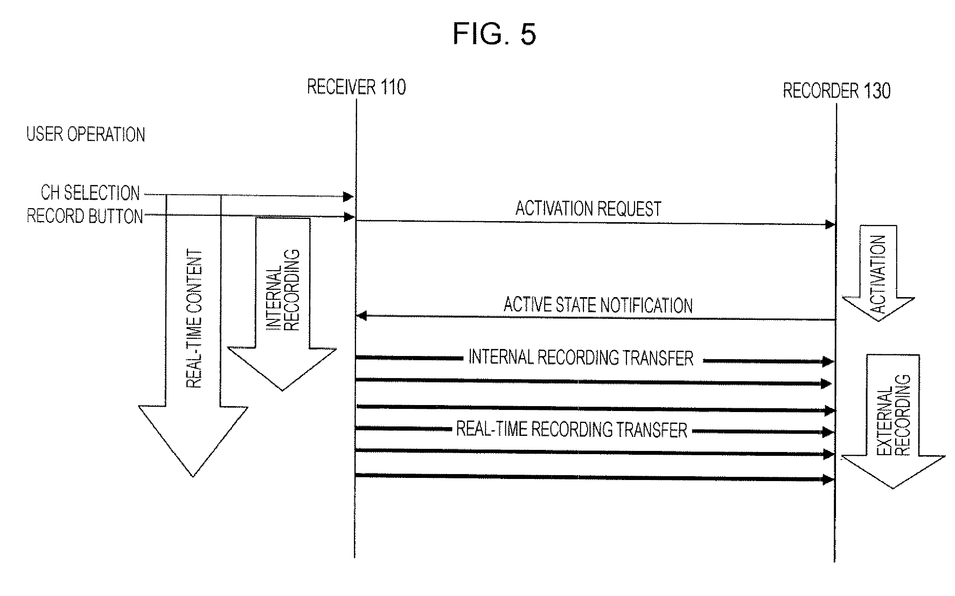

Fig. 5 shows the exemplary sequence in the case where a user confirms a program by selecting a channel (CH) using the receiver 110 and gives a recording instruction by operating a record button. The same result is achieved when the user enters operation on the basis of program information, such as an electronic program guide (EPG) or the like, In this case, it is assumed that the recorder 130 is in the standby state when a recording instruction is given.

When a recording instruction is given by a user operating the record button, the recorder 130 is in the standby state (sleep state). Therefore, the receiver 110 starts internal recording (writing received data into the HDD 122) and sends an activation request to the recorder 130. In response to the activation request from the receiver 110, the recorder 130 is turned on. After activation of the recorder 130 is completed, the recorder 130 sends an active state notification to the receiver 110.

Upon receipt of the active state notification, the receiver 110 starts transferring the internal recording, that is, starts transferring the content recorded therein (content written in the HDD 122), to the recorder 130. Accordingly, the content recorded in the receiver 110 is recorded from the beginning into the recorder 130. In Fig. 5, external recording refers to the recording using the recorder 130.

Thereafter, when the receiver 110 completes transferring the content recorded therein, the receiver 110 ends the internal recording and starts transferring the real-time recording, that is, starts transferring the received data to the recorder 130 without involving reading and writing from/to the HDD 122. Accordingly, the recorder 130 records the program, as if the recorder 130 has started recording the program from the beginning.

In the foregoing received-data recording system 100, when the recorder 130 is not capable of promptly performing recording, that is, when the recorder 130 is in the busy state, or when the recorder 130 is in the standby state at the time an instruction to record received content data is given from the receiver 110, the built-in HDD 122 in the receiver 110 is used. After the recorder 130 becomes capable of recording, the content data that has been received since the recording instruction was given is sent to the recorder 130. As a result, the content data received by the receiver 110 can be recorded in the recorder 130 without missing any part, while keeping the system configuration simple, such as avoiding preparing a plurality of recorders, selecting a recorder capable of recording, and recording content data using the selected recorder.

That is, in the foregoing received-data recording system 100, the relatively small capacity HDD 122 included in the receiver 110 can be utilized effectively. Since it becomes unnecessary for the recorder 130 to respond to all recording requests from the receiver 110, the design of the received-data recording system 100 for realizing complicated operation, such as simultaneous recording and reproducing, becomes unnecessary, and the system configuration can be simplified.

It should be understood by those skilled in the art that various modifications, combinations, sub-combinations and alterations may occur depending on design requirements and other factors insofar as they are within the scope of the appended claims or the equivalents thereof.

## Claims

1. A received-data recording system comprising:
a receiver (110) configured to receive content data;
a recorder (130) configured to record the content data received by the receiver (110), the recorder (130) being connected to the receiver (110) via a network (150),
wherein the receiver (110) includes
a receiving unit (118) configured to receive the content data,
a data read/write unit (122) configured to write the content data received by the receiving unit (118) and to read the written content data,
a data sender configured to selectively send the content data received by the receiving unit (118) or the content data read by the data read/write unit (122) to the recorder (130), and
a controller (112) configured to control the data read/write unit (122) and the data sender in accordance with a state of the recorder (130) at the time a recording instruction is given, and
wherein the recorder (130) includes
a data receiving unit configured to receive content data sent from the receiver (110), and
a data write unit configured to write the content data received by the data receiving unit.

2. A receiver comprising:
a receiving unit (118) configured to receive content data;
a data read/write unit (122) configured to write the content data received by the receiving unit (118) and to read the written content data;
a data sender configured to selectively send the content data received by the receiving unit (118) or the content data read by the data read/write unit (122) to a recorder (130); and
a controller (112) configured to control the data read/write unit (122) and the data sender in accordance with a state of the recorder (130) at the time a recording instruction is given.

3. The receiver according to claim 2, further comprising:
a recording-instruction giving unit configured to give a recording instruction to the controller (112) at a reserved recording start time; and
an activation-request sending unit configured to send an activation request to the recorder (130) in the case where the recorder (130) is in a standby state a predetermined time before the recording start time.

4. The receiver according to claim 2, wherein, when the recorder (130) is in a standby state at the time the recording instruction is given, the controller (112) sends an activation request to the recorder (130) and controls the data read/write unit (122) to start writing the content data received by the receiving unit (118),
wherein, upon receipt of an active state notification in response to the activation request, the controller (112) controls the data read/write unit (122) to write the content data received by the receiving unit (118) until the entire content data written in the data read/write unit (122) is read and to read the written content data at a bit rate higher than a bit rate at which the written content data has been written, and the controller (112) controls the data sender to send the content data read by the data read/write unit (122) to the recorder (130), and
wherein, after the entire content data written in the data read/write unit (122) has been read, the controller (112) controls the data sender to send the content data received by the receiving unit (118) to the recorder (130).

5. The receiver according to claim 2, wherein, when the recorder (130) is in a busy state at the time the recording instruction is given, the controller (112) controls the data read/write unit (122) to start writing the content data received by the receiving unit (118), and the controller (112) starts periodically determining whether the recorder (130) is in the busy state,
wherein, when the recorder (130) exits the busy state, the controller (112) controls the data read/write unit (122) to write the content data received by the receiving unit (118) until the entire content data written in the data read/write unit (122) is read and to read the written content data at a bit rate higher than a bit rate at which the written content data has been written, and the controller (112) controls the data sender to send the content data read by the data read/write unit (122) to the recorder (130), and
wherein, after the entire content data written in the data read/write unit (122) has been read, the controller (112) controls the data sender to send the content data received by the receiving unit (118) to the recorder (130).

6. A method of controlling a receiver (110) including a receiving unit (118) configured to receive content data, a data read/write unit (122) configured to write the content data received by the receiving unit (118) and to read the written content data, and a data sender configured to selectively send the content data received by the receiving unit (118) or the content data read by the data read/write unit (122) to a recorder (130), the method comprising the steps of:
sending, when the recorder (130) is in a standby state at the time a recording instruction is given, an activation request to the recorder (130) and controlling the data read/write unit (122) to start writing the content data received by the receiving unit (118);
controlling, upon receipt of an active state notification in response to the activation request, the data read/write unit (122) to write the content data received by the receiving unit (118) until the entire content data written in the data read/write unit (122) is read and to read the written content data at a bit rate higher than a bit rate at which the written content data has been written, and controlling the data sender to send the content data read by the data read/write unit (122) to the recorder (130); and
controlling, after the entire content data written in the data read/write unit (122) has been read, the data sender to send the content data received by the receiving unit (118) to the recorder (130).

7. A method of controlling a receiver (110) including a receiving unit (118) configured to receive content data, a data read/write unit (122) configured to write the content data received by the receiving unit (118) and to read the written content data, and a data sender configured to selectively send the content data received by the receiving unit (118) or the content data read by the data read/write unit (122) to a recorder (130), the method comprising the steps of:
controlling, when the recorder (130) is in a busy state at the time a recording instruction is given, the data read/write unit (122) to start writing the content data received by the receiving unit (118), and starting periodical determination whether the recorder (130) is in the busy state;
controlling, when the recorder (130) exits the busy state, the data read/write unit (122) to write the content data received by the receiving unit (118) until the entire content data written in the data read/write unit (122) is read and to read the written content data at a bit rate higher than a bit rate at which the written content data has been written, and controlling the data sender to send the content data read by the data read/write unit (122) to the recorder (130); and
controlling, after the entire content data written in the data read/write unit (122) has been read, the data sender to send the content data received by the receiving unit (118) to the recorder (130).

8. A program for allowing a computer to perform a method of controlling a receiver (110) including a receiving unit (118) configured to receive content data, a data read/write unit (122) configured to write the content data received by the receiving unit (118) and to read the written content data, and a data sender configured to selectively send the content data received by the receiving unit (118) or the content data read by the data read/write unit (122) to a recorder (130), the method comprising the steps of:
sending, when the recorder (130) is in a standby state at the time a recording instruction is given, an activation request to the recorder (130) and controlling the data read/write unit (122) to start writing the content data received by the receiving unit (118);
controlling, upon receipt of an active state notification in response to the activation request, the data read/write unit (122) to write the content data received by the receiving unit (118) until the entire content data written in the data read/write unit (122) is read and to read the written content data at a bit rate higher than a bit rate at which the written content data has been written, and controlling the data sender to send the content data read by the data read/write unit (122) to the recorder (130); and
controlling, after the entire content data written in the data read/write unit (122) has been read, the data sender to send the content data received by the receiving unit (118) to the recorder (130).

9. A program for allowing a computer to perform a method of controlling a receiver (110) including a receiving unit (118) configured to receive content data, a data read/write unit (122) configured to write the content data received by the receiving unit (118) and to read the written content data, and a data sender configured to selectively send the content data received by the receiving unit (118) or the content data read by the data read/write unit (122) to a recorder (130), the method comprising the steps of:
controlling, when the recorder (130) is in a busy state at the time a recording instruction is given, the data read/write unit (122) to start writing the content data received by the receiving unit (118), and starting periodical determination whether the recorder (130) is in the busy state;
controlling, when the recorder (130) exits the busy state, the data read/write unit (112) to write the content data received by the receiving unit (118) until the entire content data written in the data read/write unit (122) is read and to read the written content data at a bit rate higher than a bit rate at which the written content data has been written, and controlling the data sender to send the content data read by the data read/write unit (122) to the recorder (130); and
controlling, after the entire content data written in the data read/write unit (122) has been read, the data sender to send the content data received by the receiving unit (118) to the recorder (130).

10. A recorder comprising:
a data receiving unit configured to receive content data sent from a receiver (110); and
a data write unit configured to write the content data received by the data receiving unit,
wherein the data receiving unit successively receives first content data at a first bit rate and second content data at a second bit rate lower than the first bit rate, the first content data and the second content data corresponding to the same content sent from the receiver (110), and
wherein the data write unit writes the first content data and the second content data successively received by the data receiving unit as content data corresponding to the same content.

11. A data recording method comprising the steps of:
receiving content data sent from a receiver (110); and
writing the received content data,
wherein, in the case where content data sent from the receiver (110) is received, first content data and second content data corresponding to the same content sent from the receiver (110) are successively received at a first bit rate and a second bit rate lower than the first bit rate, respectively, and
wherein, in the case where the received content data is written, the first content data and the second content data successively received are written as content data corresponding to the same content.
